# EUROPEAN PATENT APPLICATION

(11) **EP 4 517 074 A1**
(43) Date of publication of application: **05.03.2025**
(21) Application number: 24197748.7
(22) Date of filing: 30.08.2024
(51) Int. Cl.: F02C 7/06, F01D 25/20

(54) **TOWER SHAFT DRIVEN PLANTETARY FAN DRIVE GEAR LUBRICATION SYSTEM**

(30) Priority: 30.08.2023 US 202318458640
(71) Applicant: RTX Corporation, Farmington, CT 06032 (US)
(72) Inventor: MULDOON, Marc J., Farmington, 06032 (US); PARNIN, Francis, Farmington, 06032 (US)
(74) Representative: Dehns

(57) **Abstract**

A turbine engine (20) has a fan drive gear system (48), a first lubrication circuit having a first pump (74) communicating oil to the fan drive gear system (48), and at least one low shaft bearing assembly (94,96). The first pump (74) is driven by a low spool through a first tower shaft (78). A second lubrication circuit includes a second pump (86) driven by one of a high spool and the low spool separate from the first pump (74) and communicates oil to engine components separate from the first lubrication circuit.

## Description

### BACKGROUND

A turbine engine typically includes a fan section, a compressor section, a combustor section, and a turbine section. A speed reduction device such as an epicyclical gear assembly may be utilized to drive the fan section such that the fan section may rotate at a speed different than the turbine section so as to increase the overall propulsive efficiency of the engine. Lubrication of the gear assembly may require lubricant at pressures and temperature different from lubricant provided to other locations within the engine. Moreover, efficient, and continuous lubricant flow to the gear assembly provides the efficiencies required to realize other engine performance improvements.

### SUMMARY

A turbine engine according to an aspect of the present invention includes, among other possible things, a fan section including a plurality of fan blades and a fan shaft configured for rotation about an engine longitudinal axis, a high spool including a high pressure compressor coupled to a high pressure turbine through a high shaft, a low spool including a low pressure turbine and a low shaft, a combustor where compressed inlet air is mixed with fuel and burned to generate an exhaust gas flow that is expanded through each of the high pressure turbine and the low pressure turbine, a fan drive gear system including a rotatable carrier configured to drive the fan shaft, at least one low shaft bearing assembly supporting rotation of the low shaft, a first tower shaft coupled to the low shaft through a first gear interface, a first lubrication circuit having a first pump communicating oil to at least the fan drive gear system and the at least one low shaft bearing assembly, wherein the first pump is driven by the low spool through the first tower shaft, and a second lubrication circuit having a second pump driven by one of the high spool and the low spool separate from the first pump, the second lubrication system communicating oil to engine components separate from the first lubrication system.

Optionally, and in accordance with the above, an accessory gear box is coupled to be driven by one of the low spool and the high spool, wherein the second pump is driven through the accessory gear box.

Optionally, and in accordance with any of the above, further including an oil scavenge system having a collector where oil is recovered from the fan drive gear system and communicated to an auxiliary reservoir.

Optionally, and in accordance with any of the above, the first pump is in communication with the auxiliary reservoir.

Optionally, and in accordance with any of the above, a control valve controlling oil flow from the first pump back to the fan drive gear system.

Optionally, and in accordance with any of the above, wherein the at least one low shaft bearing assembly comprises at least a forward bearing assembly supporting a forward end of the low shaft and an aft bearing assembly supporting an aft end of the low shaft.

Optionally, and in accordance with any of the above, further including a forward compartment including the fan drive gear system and the forward bearing assembly and the first pump provides oil to at least the fan drive gear system and the forward bearing assembly in the forward compartment.

Optionally, and in accordance with any of the above, further including a low spool compartment with the aft bearing assembly and the first pump provides oil to at least the aft bearing assembly within the low spool compartment.

Optionally, and in accordance with any of the above, further including a single oil tank and both the first pump and the second pump are in flow communication with the main lubricant tank.

A lubrication system for a turbine engine having a fan drive gear system according to another aspect of the present invention includes, among other possible things, a first lubrication circuit communicating oil to at least the fan drive gear system and at least one low shaft bearing assembly, the first lubrication system having a first pump for generating a flow oil through the first lubrication circuit, the first pump driven by a low spool shaft that is coupled to drive the fan drive gear system, and a second lubrication circuit communicating oil to engine components separate from the first lubrication system, the second lubrication system having a second pump driven separate from the first pump for generating a flow of oil through the second lubrication system.

Optionally, and in accordance with any of the above, an oil scavenge system includes a collector where oil is recovered from the fan drive gear system and communicated to an auxiliary reservoir and the first pump is in communication with the auxiliary reservoir.

Optionally, and in accordance with any of the above, a control valve controls oil flow from the first pump to the fan drive gear system.

Optionally, and in accordance with any of the above, the first pump of the first lubrication circuit provides a flow of oil to a forward compartment including the fan drive gear system and a forward bearing assembly and the first pump provides oil to at least the fan drive gear system and the forward bearing assembly in the forward compartment.

Optionally, and in accordance with any of the above, the first pump of the first lubrication circuit provides a flow of oil to a low spool compartment with an aft bearing assembly and the first pump provides oil to at least the aft bearing assembly within the low spool compartment.

Optionally, and in accordance with any of the above, the second lubrication circuit provides a flow of oil to a high spool compartment.

Optionally, and in accordance with any of the above, the first pump is operable to generate a flow of oil in response to rotation of the fan drive gear system during non-powered operating conditions.

Optionally, and in accordance with any of the above, a single oil tank is included and both the first pump and the second pump are in flow communication with the main lubricant tank.

A turbine engine according to another aspect of the present invention includes, among other possible things, a fan section including a plurality of fan blades and a fan shaft configured for rotation about an engine longitudinal axis, a high spool including a high pressure compressor coupled to a high pressure turbine through a high shaft, a low spool including a low pressure turbine and a low shaft, a combustor configured to generate an exhaust gas flow that is expanded through each of the high pressure turbine and the low pressure turbine, a fan drive gear system including a sun gear coupled to the low shaft, a plurality of intermediate gears driven by the sun gear and supported by a carrier, and a ring gear fixed to an engine static structure, wherein the carrier is rotatable and coupled to drive the fan shaft at a speed less than a speed of the low shaft, a first tower shaft coupled to the low shaft through a first gear interface, a first lubrication circuit communicating oil to at least the fan drive gear system and at least one low shaft bearing assembly, the first lubrication system having a first pump for generating a flow oil through the first lubrication circuit, the first pump driven by the low spool shaft, a second lubrication circuit communicating oil to engine components separate from the first lubrication system, the second lubrication system having a second pump driven separate from the first pump for generating a flow of oil through the second lubrication system.

Optionally, and in accordance with any of the above the turbine engine includes a forward compartment including the fan drive gear system and a forward bearing assembly and a low spool compartment with an aft bearing assembly and the first pump provides oil to at least the fan drive gear system, the forward bearing assembly, and the aft bearing assembly within the low spool compartment.

Optionally, and in accordance with any of the above, the second lubrication circuit provides a flow of oil to a high spool compartment separate from the forward compartment and the low spool compartment.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example gas turbine engine including a planetary fan drive gear system.
Figure 2 is a schematic view of the example gas turbine engine shown in Figure 1.
Figure 3 is a schematic view of an example lubrication system embodiment.
Figure 4 is a schematic view of another example lubrication system embodiment.

### DETAILED DESCRIPTION

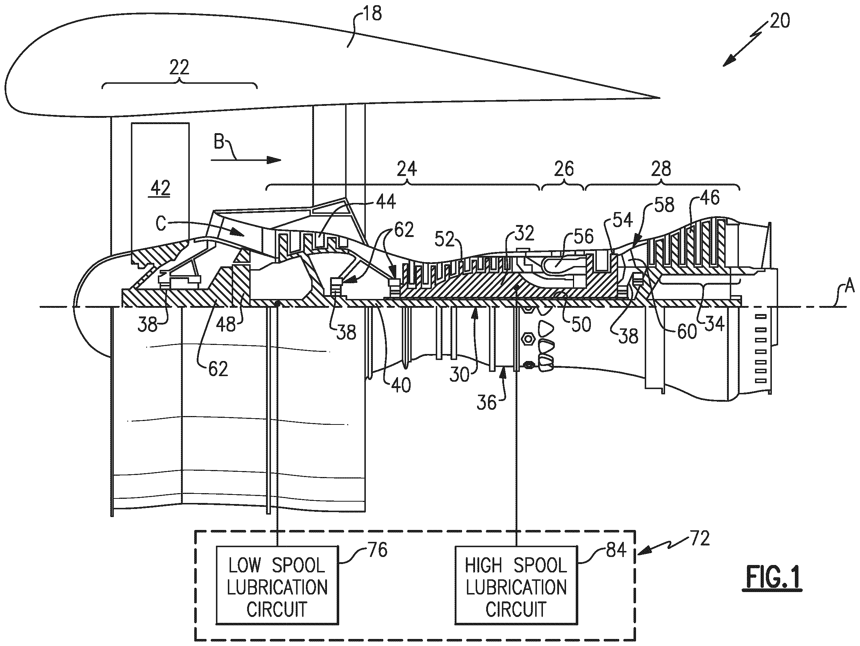

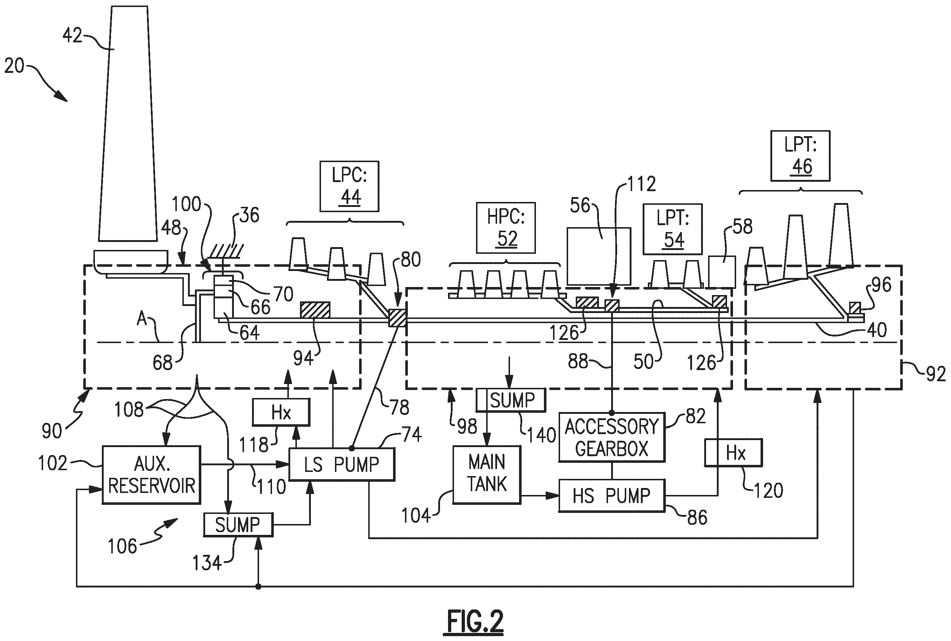

Figures 1 and 2 schematically illustrate a gas turbine engine 20 with a lubrication system 72 having a low spool lubrication circuit 76 and a high spool lubrication circuit 84. The low spool lubrication circuit 76 includes a low spool driven oil pump 74 that provides lubricant flow to a fan drive gear system 48 and low spool compartments.

The gas turbine engine 20 is disclosed herein as a two-spool turbofan that generally incorporates a fan section 22 having a plurality of fan blades 42, a compressor section 24, a combustor section 26 and a turbine section 28. The fan section 22 drives air along a bypass flow path B in a bypass duct defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures, turbofans, turboprop, and any other gas turbine engine architecture.

The exemplary engine 20 generally includes a low speed spool 30 (also referred to as a low spool) and a high speed spool 32 (also referred to as a high spool) mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner low shaft 40 that interconnects, a first (or low) pressure compressor 44 and a first (or low) pressure turbine 46. The low shaft 40 is connected to a fan section 22 through a speed change mechanism, which in exemplary gas turbine engine 20 is illustrated as the fan drive gear system 48 to drive the fan section 22 at a lower speed than the low speed spool 30. The high speed spool 32 includes an outer high shaft 50 that interconnects a second (or high) pressure compressor 52 and a second (or high) pressure turbine 54. The low pressure turbine 46 includes a plurality of turbine rotors 34. A combustor 56 is arranged in exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The low shaft 40 and the high shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, the fan drive gear system 48 may be located aft of the low pressure compressor 44, or aft of the combustor section 26 or even aft of turbine section 28, and fan section 22 may be positioned forward or aft of the fan drive gear system 48.

The engine 20 in one example is a high-bypass geared aircraft engine. In a further example, the engine 20 bypass ratio is greater than about six (6), with an example embodiment being greater than about ten (10) and less than about twenty (20). In yet a further example, the example engine 20 includes a bypass ratio greater than 20, with an example embodiment being greater than 32 and less than 72.

The fan drive gear system 48 is an epicycle gear train with a gear reduction ratio of greater than about 5:1 and less than about 18:1. In another example embodiment, the fan drive gear system 48 provides a gear reduction ratio of between 8:1 and 14:1. The gear system 48 is coupled to the fan shaft 62 to drive the fan section 22 about the engine axis A. It should be understood, however, that the above parameters are only exemplary of one embodiment of a geared engine architecture and that the present disclosure is applicable to other gas turbine engine architectures including turbofan, turboshaft, and open rotor engines.

Referring to Figure 2 with continued reference to Figure 1, the example fan drive gear system 48 is an epicyclic gear system with a sun gear 64 engaged to a plurality of compound intermediate gears 66 supported by a rotating carrier 68. A ring gear 70 circumscribes the intermediate gears 68 and is fixed to a static engine structure 36. The fan shaft 62 is coupled to the rotating carrier 68.

The fan drive gear system 48 is disposed in a forward compartment 90 that further includes a forward bearing assembly 94. The forward bearing assembly 94 supports a forward end of the low shaft 40. An oil collector 100 is part of an oil scavenge system 106 that recovers and directs recovered oil 108 to an auxiliary reservoir 102 and an oil sump 134.

The low spool lubrication circuit 76 includes a first pump 74 driven by a first tower shaft 78 coupled to the low shaft 40 through a first gear coupling 80. The first pump 74 provides oil to the forward compartment 90 and to an aft low spool compartment 92. The low spool compartment 92 includes an aft bearing assembly 96 that supports an aft end of the low shaft 40. Oil exhausted from the lubrication circuit 76 is communicated through an oil scavenge system 106.

The high spool lubrication circuit 84 includes a second pump 86 that provides oil to at least a high spool compartment 98. The example high spool compartment 98 may include bearing assemblies 126 that support rotation of the high shaft 50. The bearing assemblies 126 along with other components within the high spool compartment 98 receives an oil flow from the second pump 86. The second pump 86 is driven through an accessory gearbox 82 that is coupled to a second tower shaft 88. The second tower shaft 88 is coupled to the high shaft 50 at a second gear coupling 112.

Although the gear system 48 and bearing assemblies, 94, 96 and 126 are disclosed by way of example as components that received a lubricant flow from the corresponding one of the pumps 74, 86 other components will also receive a lubricant flow. For example, any other bearing systems that support rotation of rotating components and shaft seals that are also provide to support operation will also receive an oil flow from a corresponding one of the pumps 74, 86.

Although tower shafts 78, 88 are shown by way of example as providing a driving connection between the corresponding one of the low shaft 40 and the high shaft 50, other driving coupling arrangements could be utilized and are within the contemplation of this disclosure.

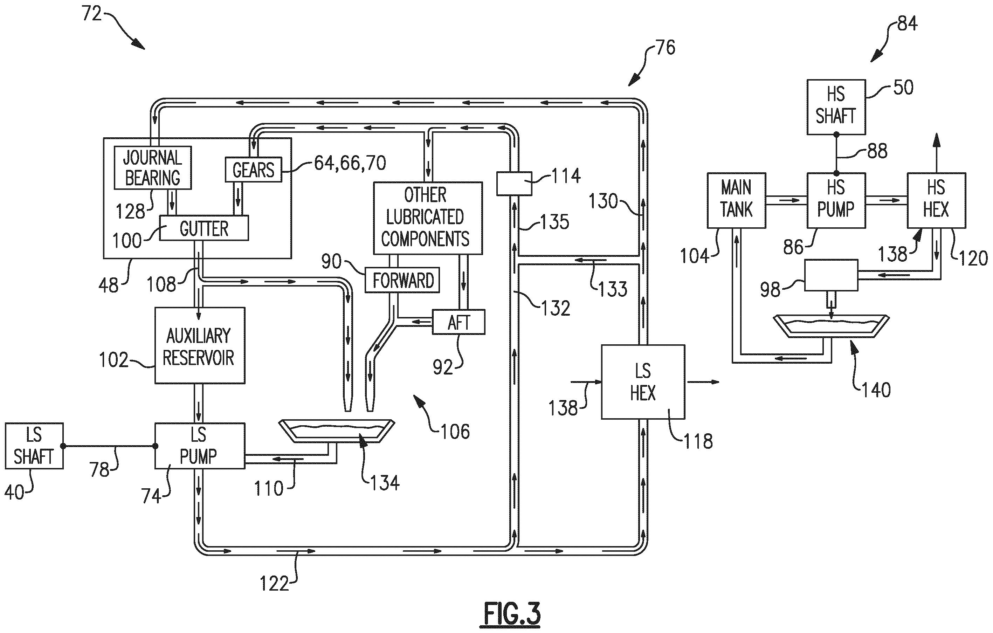

Referring to Figure 3 with continued reference to Figures 1 and 2, the first pump 74 is in communication with the auxiliary reservoir 102 and receives an oil flow 110 from the oil sump 134. The oil flow 110 is directed by the first pump 74 toward the gear system 48 and other lubricated components disposed within each of the forward compartment 90 and the aft compartment 92. The other lubricant components include the bearing assemblies 94 and 96 (Figure 2) along with any other components within the compartments 90, 92 that require lubricant.

A heat exchanger 118 may be provided to cool oil flow directed toward components in the first compartment 90. In one example disclosed embodiment a cooled oil flow in conduit 130 is communicated to journal bearings 128 of the gear system 48. Oil flow within the heat exchanger 118 may be in thermal communication with a cold sink flow 138 such as fan bypass air or a portion of a fuel flow to provide the cool oil flow in conduit 130. Although the disclosed example illustrates cooled oil flow supplied to the journal bearings 128, the cooled oil flow in conduit 130 may be provided to other components that operate with cooler oil.

An oil flow in conduit 132 is not passed through the heat exchanger 118. Cooled oil from the heat exchanger 118 is communicated through a bypass conduit 133 to conduit 132, resulting in a partially cooled flow in conduit 135. The oil flow in conduit 135 is provided to components such as gear interfaces and the bearing assemblies 94, 96. Although the example illustrates a fixed bypass flow, this flow could be modulated through a mechanically or electronically controlled valve.

The valve 114 provides for a continuous supply of oil to certain components in the event of temporary interruption of the typical means of oil supply due to aircraft maneuvers. In one disclosed example, the valve 114 shuts off flow to the other lubricated components such that all or most of available oil is directed to the journal bearings 128. The example valve 114 may be an on/off valve or be a proportional valve to vary a split between the oil flows in conduits 130 and 132. The example valve 114 operates based on pressure differentials between the various oil flows. In one disclosed example embodiment, the valve 114 is a journal oil shuttle valve (JOSV), however other valves and valve assemblies may be utilized and are within the contemplation and scope of this disclosure.

Lubricant expelled by components in the forward and aft compartments 90, 92 is directed through an oil scavenge system 106 to the sump 134. Lubricant exhausted from the gear system 48 is communicated to the auxiliary reservoir 102 and to the sump 134. The example auxiliary reservoir 102 maintains a quantity of oil that is utilized to maintain sufficient oil flow to components. Although a single sump 134 is shown by way of example, several sumps may be provided throughout the engine to accommodate oil exhausted from bearing assemblies, seal assemblies and any other components that receive a flow of oil.

The high spool lubrication circuit 84 includes the second pump 86 that draws oil from a main tank 104 and pumps oil to components within the high spool compartment 98. The example high spool lubrication circuit 84 operates independent of the low spool lubrication circuit 76. A heat exchanger 120 provides for cooling of the oil flow and may be cooled by a heat sink flow 138 such as fan bypass flow and/or fuel flow. Expelled oil is captured by a sump system 140 and communicated back to the main tank 104. Although a single sump 140 is shown by way of example, several sumps may be located proximate to corresponding components to recapture oil.

Although a single heat exchanger 118, 120 is shown by way of example in each of the low spool lubrication circuit 76 and the high spool lubrication circuit 84, additional heat exchangers maybe utilized and arranged as necessary to cool oil flow or thermally control engine systems and components.

In one example operational embodiment, oil flow 122 is generated by the low spool pump 74. A portion of the oil flow 122 is communicated through the heat exchanger 118 to generate a cooled oil flow in conduit 130. Another portion of the oil flow 122 is communicated as oil flow in conduit 132 to components in the forward compartment 90 and the aft compartment 92. The oil flow in conduit 132 is communicated to the forward compartment 90 is provided to the gear system 48 and the forward bearing assembly 94. The cooled oil flow in conduit 130 is provided to the journal bearings 128.

A portion of the oil flow in conduit 132 is not passed through the heat exchanger 118 is mixed with cooled oil from the heat exchanger 118 through the bypass conduit 133 resulting in the partially cooled flow in conduit 135. The oil flow in conduit 135 is provided to components such as gear interfaces and the bearing assemblies 94, 96.

Oil expelled from the gear system 48 is captured in a gutter 100 and communicated as oil flow 108 to the auxiliary reservoir and the sump 134. Oil from both the auxiliary reservoir 102 and the sump 134 are communicated back to the low spool driven pump 74 for recirculation.

During normal operation, the valve 114 is open and the oil flow 132 is provided to the FDGS gears 64, 66, 70 and components in each of the forward and aft compartments 90, 92. The valve 114 will operate in response to an indicative of a low flow or pressure condition to certain components, such as the journal bearings 128 as an example. The valve 114 will operate such that a minimum amount of flow is maintained to the journal bearings 128. The valve 114 may shut off flow to other components, and/or proportion flow to maintain the desired flow to the journal bearings 128.

Separate and independent of oil flows in the low spool lubrication circuit 76, oil is pumped by the second pump 86 from the main tank 104 to the components within the high spool compartment 98. Oil is recaptured in a sump 140 and directed back to the main tank 104.

The low spool driven first pump 74 is further operable to maintain an oil flow to the gear system 48 when the engine is not operating, but the fan is spinning (windmill). The fan may spin due to wind while on the ground or during an engine off condition during flight. In each case, rotation of the fan drives the gear system 48, that in turn rotates the low shaft 40 and thereby the first pump 74. The non-powered operation of the first pump 74 maintains oil flows to maintain operation of the gear system 48 and other components within the low spool lubrication circuit 76.

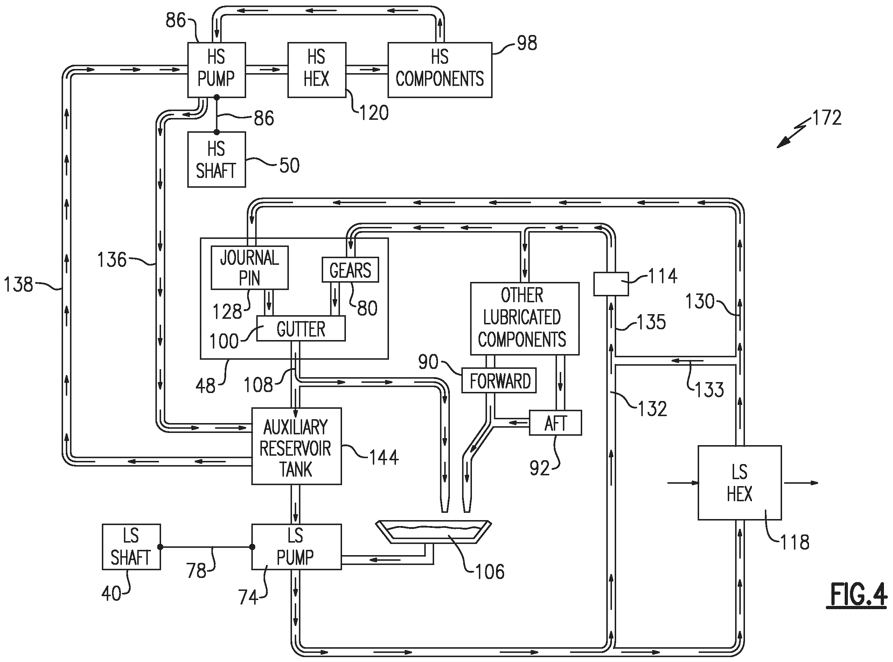

Referring to Figure 4, another lubrication system 172 is schematically shown and couples both the low spool driven first pump 74 and the high spool driven second pump 86 to a common oil tank 144. In this example, the oil tank 144 includes features of both the auxiliary tank 102 and main tank 104 of the previous example embodiment. Recaptured oil from the high spool lubrication circuit 84 is communicated to the tank 144. Both the first pump 74 and the second pump 86 draws from the same tank 144 although each pump is driven by a separate engine shaft. Combining oil for both systems in the single tank 144 eases maintenance requirements while maintain the benefits of independent and separate pump operation.

Accordingly, the example gas turbine engine includes a low spool driven pump that maintains a minimum flow of oil through a separate lubrication circuit to the fan drive gear system 48 during all engine operating conditions.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A turbine engine (20) comprising:
a fan section (22) including a plurality of fan blades (42) and a fan shaft (62) configured for rotation about an engine longitudinal axis (A);
a high spool (32) including a high pressure compressor (52) coupled to a high pressure turbine (54) through a high shaft (50);
a low spool (30) including a low pressure turbine (46) and a low shaft (40);
a combustor (56) in which compressed inlet air is mixed with fuel and burned to generate an exhaust gas flow that is expanded through each of the high pressure turbine (54) and the low pressure turbine (46);
a fan drive gear system (48) including a rotatable carrier (68) configured to drive the fan shaft (62);
at least one low shaft bearing assembly (94,96) supporting rotation of the low shaft (40);
a first tower shaft (78) coupled to the low shaft (40) through a first gear interface (80);
a first lubrication circuit (76) having a first pump (74) configured to communicate oil to the fan drive gear system (48) and the at least one low shaft bearing assembly (94,96), wherein the first pump (74) is driven by the low spool (30) through the first tower shaft (78); and
a second lubrication circuit (84) having a second pump (86) driven by the high spool (32) or the low spool (30) separate from the first pump (74), the second lubrication circuit (84) configured to communicate oil to engine components separate from the first lubrication circuit (76).

2. The turbine engine (20) as recited in claim 1, further including an accessory gear box (82) coupled to be driven by low spool (30) or the high spool (32), wherein the second pump (86) is driven through the accessory gear box (82).

3. The turbine engine (20) as recited in claim 1 or 2, including an oil scavenge system (106) having a collector (100) configured to recover oil from the fan drive gear system (48) and communicate the recovered oil to an auxiliary reservoir (102).

4. The turbine engine (20) as recited in claim 3, wherein the first pump (74) is in flow communication with the auxiliary reservoir (102).

5. The turbine engine (20) as recited in any preceding claim, further comprising a control valve (114) controlling oil flow from the first pump (74) to the fan drive gear system (48).

6. The turbine engine (20) as recited in any preceding claim, wherein the at least one low shaft bearing assembly (94,96) comprises at least a forward bearing assembly (94) supporting a forward end of the low shaft (40) and an aft bearing assembly (96) supporting an aft end of the low shaft (40).

7. The turbine engine (20) as recited in claim 6, including a forward compartment (90) including the fan drive gear system (48) and the forward bearing assembly (94)., and wherein the first pump (74) is configured to provides oil to the forward bearing assembly (94) in the forward compartment (90).

8. The turbine engine (20) as recited in claim 6 or 7, including a low spool compartment (92) including the aft bearing assembly (96) and the first pump (74) is configured to provide oil to the aft bearing assembly (96) within the low spool compartment (92).

9. The turbine engine (20) as recited in any preceding claim, further comprising a single oil tank (144), wherein both the first pump (74) and the second pump (86) are in flow communication with the single oil tank (144).

10. A lubrication system (72;172) for a turbine engine (20) having a fan drive gear system (48), the lubrication system (72; 172) comprising:
a first lubrication circuit (76) configured to communicate oil to the fan drive gear system (48) and at least one low shaft bearing assembly (94,96), the first lubrication system (76) having a first pump (74) for generating a flow oil through the first lubrication circuit (76), the first pump (74) driven by a low spool shaft (40) that is coupled to drive the fan drive gear system (48); and
a second lubrication circuit (84) configured to communicate oil to engine components separate from the first lubrication system (76), the second lubrication circuit (84) having a second pump (86) driven separate from the first pump (74) for generating a flow of oil through the second lubrication circuit (84),
optionally wherein:
the lubrication system (72; 172) includes an oil scavenge system (106) having a collector (100) configured to recover oil from the fan drive gear system (48) and communicate the recovered oil to an auxiliary reservoir (102), wherein the first pump (74) is in communication with the auxiliary reservoir (102);
the first pump (74) of the first lubrication circuit (76) is configured to provide a flow of oil to a forward compartment (90) including the fan drive gear system (48) and a forward bearing assembly (94), and the first pump (74) is configured to provide oil to at least the fan drive gear system (48) and the forward bearing assembly (94) in the forward compartment (90);
the first pump (74) of the first lubrication circuit (76) is configured to provide a flow of oil to a low spool compartment (92) including an aft bearing assembly (96) and the first pump (74) is configured to provide oil to the aft bearing assembly (96) within the low spool compartment (92); and/or
the lubrication system (172) further comprises a single oil tank (144), wherein both the first pump (74) and the second pump (86) are in flow communication with the single oil tank (144).

11. The lubrication system (72;172) as recited in claim 10, further comprising a control valve (114) configured to control oil flow from the first pump (74) to the fan drive gear system (48).

12. The lubrication system (72;172) as recited in claim 10 or 11, wherein the second lubrication circuit (84) is configured to provide a flow of oil to a high spool compartment (98).

13. The lubrication system (72;172) as recited in claim 10, 11 or 12, wherein the first pump (74) is configured to generate a flow of oil in response to rotation of the fan drive gear system (48) during non-powered operating conditions.

14. A turbine engine (20) comprising:
a fan section (22) including a plurality of fan blades (42) and a fan shaft (62) configured for rotation about an engine longitudinal axis (A);
a high spool (32) including a high pressure compressor (52) coupled to a high pressure turbine (54) through a high shaft (50);
a low spool (30) including a low pressure turbine (46) and a low shaft (40);
a combustor (56) configured to generate an exhaust gas flow that is expanded through each of the high pressure turbine (54) and the low pressure turbine (46);
a fan drive gear system (48) including a sun gear coupled to the low shaft, a plurality of intermediate gears driven by the sun gear and supported by a carrier, and a ring gear fixed to an engine static structure, wherein the carrier is rotatable and coupled to drive the fan shaft at a speed less than a speed of the low shaft;
a first tower shaft (78) coupled to the low shaft (40) through a first gear interface (80);
a first lubrication circuit (76) configured to communicate oil to the fan drive gear system (48) and at least one low shaft bearing assembly (94,96), the first lubrication system (76) having a first pump (74) configured to generate a flow oil through the first lubrication circuit (76), the first pump (74) driven by the low spool shaft (40); and
a second lubrication circuit (84) configure to communicate oil to engine components separate from the first lubrication system (76), the second lubrication system (84) having a second pump (86) driven separate from the first pump (74) and configured to generate a flow of oil through the second lubrication circuit (84), optionally wherein the turbine engine (20) includes:
a forward compartment (90) including the fan drive gear system (48) and a forward bearing assembly (94); and
a low spool compartment (92) including an aft bearing assembly (96), wherein the first pump (74) is configured to provide oil to the forward bearing assembly (94) and the aft bearing assembly.

15. The turbine engine as recited in claim 14, wherein the second lubrication circuit (84) is configured to provide a flow of oil to a high spool compartment (98) separate from the forward compartment (90) and the low spool compartment (92).
